# EUROPEAN PATENT APPLICATION

(11) **EP 4 832 430 A1**
(43) Date of publication of application: **28.10.2026**
(21) Application number: 24921560.9
(22) Date of filing: 28.10.2024
(51) Int. Cl.: H04L 27/26, H04W 72/0453

(54) **DATA TRANSMISSION METHOD, COMMUNICATION APPARATUS, AND STORAGE MEDIUM**

(30) Priority: 01.02.2024 CN 202410158306
(71) Applicant: ZTE Corporation, Shenzhen, Guangdong 518057 (CN)
(72) Inventor: HUA, Jian, Shenzhen, Guangdong 518057 (CN); XIN, Yu, Shenzhen, Guangdong 518057 (CN); BAO, Tong, Shenzhen, Guangdong 518057 (CN)
(74) Representative: Ziebig Hengelhaupt Intellectual Property Attorneys Patentanwaltskanzlei PartGmbB
(86) International application number: PCT/CN2024/127817
(87) International publication number: WO 2025/161536

(57) **Abstract**

Provided are a data transmission method, a communication apparatus, and a storage medium. The data transmission method comprises: dividing data to be transmitted into N first sequences, wherein among the N first sequences, M first sequences each correspond to one single carrier sub-band, and K first sequences each correspond to one multi-carrier sub-band, and within the duration of one time domain symbol, the amount of data of the first sequences corresponding to the multi-carrier sub-bands is less than the amount of data of the first sequences corresponding to the single carrier sub-bands; obtaining N second sequences on the basis of the N first sequences; performing first inverse Fourier transform on the N second sequences to obtain N third sequences; performing second inverse Fourier transform on the N third sequences to obtain a time domain data sequence; and transmitting the time domain data sequence on a transmission resource of the data to be transmitted.

## Description

The present disclosure claims the priority to the Chinese Patent Application No. 202410158306.3, filed on February 1, 2024, the entire content of which is incorporated herein by reference.

### TECHNICAL FIELD

The present disclosure relates to the communication technology field, and in particular, to a data transmission method, a communication apparatus, and a storage medium.

### BACKGROUND

With the development of communication technologies, future 6th-generation mobile communication technology (6G) services use a wide span of frequency bands and have diverse deployments. Not only a multi-bandwidth channel is required, but also waveform schemes satisfying different scenarios are required. Implementing each waveform scheme independently will increase a cost of a base station/terminal.

### SUMMARY

In an aspect, embodiments of the present disclosure provide a data transmission method. The data transmission method includes:
dividing to-be-transmitted data into N first sequences; where among the N first sequences, each of M first sequences corresponds to a single-carrier subband, each of K first sequences corresponds to a multi-carrier subband, N is a positive integer, M is a positive integer less than N, and K is equal to N-M; and within a time-domain symbol length, a quantity of data of a first sequence corresponding to the multi-carrier subband is less than a quantity of data of a first sequence corresponding to the single-carrier subband;
obtaining N second sequences based on the N first sequences; where the N second sequences include a sequence obtained by performing a Fourier transform on the first sequence corresponding to the single-carrier subband, a sequence obtained by performing a zero-padding operation on a first sequence corresponding to a multi-carrier subband adjacent to the single-carrier subband, and a first sequence corresponding to a multi-carrier subband non-adjacent to the single-carrier subband;
performing a first inverse Fourier transform on the N second sequences to obtain N third sequences;
performing a second inverse Fourier transform on the N third sequences to obtain a time-domain data sequence; and
transmitting the time-domain data sequence on a transmission resource of the to-be-transmitted data.

In another aspect, the embodiments of the present disclosure provide a data transmission method. The data transmission method includes:
transmitting data on a channel bandwidth; where the channel bandwidth includes W subbands; among the W subbands, M subbands are single-carrier subbands, K subbands are multi-carrier subbands, M is less than or equal to N, N is less than or equal to W, K is equal to N-M, and N, W, M are all positive integers; and
within a time-domain symbol length, a quantity of data in a first sequence corresponding to a multi-carrier subband adjacent to a single-carrier subband is less than a number of subcarriers of the multi-carrier subband; a quantity of data in a first sequence corresponding to a multi-carrier subband non-adjacent to the single-carrier subband is equal to the number of subcarriers of the multi-carrier subband; a quantity of data in a first sequence corresponding to the single-carrier subband is greater than a number of subcarriers of a multi-carrier subband.

In yet another aspect, the embodiments of the present disclosure provide a data transmission apparatus. The data transmission apparatus includes: a processing module and a communication module;
the processing module is configured to: divide to-be-transmitted data into N first sequences; where among the N first sequences, each of M first sequences corresponds to a single-carrier subband, each of K first sequences corresponds to a multi-carrier subband, N is a positive integer, M is a positive integer less than N, and K is equal to N-M; and within a time-domain symbol length, a quantity of data of a first sequence corresponding to the multi-carrier subband is less than a quantity of data of a first sequence corresponding to the single-carrier subband;
the processing module is further configured to: obtain N second sequences based on the N first sequences; where the N second sequences include a sequence obtained by performing a Fourier transform on the first sequence corresponding to the single-carrier subband, a sequence obtained by performing a zero-padding operation on a first sequence corresponding to a multi-carrier subband adjacent to the single-carrier subband, and a first sequence corresponding to a multi-carrier subband non-adjacent to the single-carrier subband;
the processing module is further configured to: perform a first inverse Fourier transform on the N second sequences to obtain N third sequences;
the processing module is further configured to: perform a second inverse Fourier transform on the N third sequences to obtain a time-domain data sequence; and
the communication module is configured to: transmit the time-domain data sequence on a transmission resource of the to-be-transmitted data.

In yet another aspect, the embodiments of the present disclosure provide a data transmission apparatus. The data transmission apparatus includes: a communication module;
the communication module is configured to: transmit data on a channel bandwidth; where the channel bandwidth includes W subbands; among the W subbands, M subbands are single-carrier subbands, K subbands are multi-carrier subbands, M is less than or equal to N, N is less than or equal to W, K is equal to N-M, and N, W, M are all positive integers; and
within a time-domain symbol length, a quantity of data in a first sequence corresponding to a multi-carrier subband adjacent to a single-carrier subband is less than a number of subcarriers of the multi-carrier subband; a quantity of data in a first sequence corresponding to a multi-carrier subband non-adjacent to the single-carrier subband is equal to the number of subcarriers of the multi-carrier subband; a quantity of data in a first sequence corresponding to the single-carrier subband is greater than a number of subcarriers of a multi-carrier subband.

In yet another aspect, the embodiments of the present disclosure provide a communication apparatus. The communication apparatus includes: a memory and a processor; the memory and the processor are coupled; the memory is configured to store computer program instructions executable by the processor; the processor, upon executing the computer program instructions, implements the data transmission method according to any one of the above embodiments.

In yet another aspect, the embodiments of the present disclosure provide a computer-readable storage medium, where the computer-readable storage medium stores computer program instructions, and the computer program instructions, when run on a computer (e.g., a communication apparatus or a signal transmission apparatus), implement the data transmission method according to any one of the above embodiments.

In yet another aspect, the embodiments of the present disclosure provide a computer program product, where the computer program product includes computer program instructions, and the computer program instructions, when executed, implement the data transmission method according to any one of the above embodiments.

### BRIEF DESCRIPTION OF THE DRAWINGS

FIG. 1 is a schematic diagram of an architecture of a communication system according to some embodiments.
FIG. 2 is a flowchart of a data transmission method according to some embodiments.
FIG. 3 is a schematic diagram of a process of a data transmission according to some embodiments.
FIG. 4 is a schematic diagram of a process of another data transmission according to some embodiments.
FIG. 5 is a schematic diagram of a process of yet another data transmission according to some embodiments.
FIG. 6 is a schematic diagram of a process of yet another data transmission according to some embodiments.
FIG. 7 is a schematic diagram of a process of yet another data transmission according to some embodiments.
FIG. 8 is a schematic diagram of a process of yet another data transmission according to some embodiments.
FIG. 9 is a schematic diagram of a process of yet another data transmission according to some embodiments.
FIG. 10 is a schematic diagram of a process of yet another data transmission according to some embodiments.
FIG. 11 is a schematic diagram of a process of yet another data transmission according to some embodiments.
FIG. 12 is a schematic diagram of a process of yet another data transmission according to some embodiments.
FIG. 13 is a structural schematic diagram of a data transmission apparatus according to some embodiments.
FIG. 14 is a structural schematic diagram of another data transmission apparatus according to some embodiments.
FIG. 15 is a structural schematic diagram of a communication apparatus according to some embodiments.

### DETAILED DESCRIPTION

The technical solutions in the embodiments of the present disclosure will be described clearly and completely below in conjunction with the drawings in the embodiments of the present disclosure. It is obvious that the described embodiments are only a part of the embodiments of the present disclosure, but not all of the embodiments. Based on the embodiments in the present disclosure, all other embodiments obtained by those ordinary skilled in the art without creative efforts shall fall within the protection scope of the present disclosure.

In the description of the present disclosure, unless otherwise stated, the character "/" means "or", and for example, "A/B" may mean A or B. Herein, "and/or" is merely an association relationship for describing associated objects, which represents that there may be three kinds of relationships, for example, 'A and/or B' may represent: only A, both A and B, and only B. In addition, "at least one" means one or more, and "a/the plurality of/multiple" means two or more. The words "first" and "second", etc., do not limit the quantity and execution order, and the expressions "first" and "second" and the like are not necessarily used to limit the different items.

It should be noted that, in the present disclosure, the expressions such as "exemplary/exemplarily" or "for example (e.g., such as)" are used to present an example, illustration, or explanation. Any embodiment or design scheme described with "exemplary/exemplarily" or "for example (e.g., such as)", etc., in the present disclosure should not be construed as preferred or advantageous over other embodiments or design schemes. Rather, the usage of the expressions, such as "exemplary /exemplarily" or "for example (e.g., such as)", etc., is intended to present relevant concepts in detail.

The Long Term Evolution (LTE) technology is a wireless cellular communication technology for 4G. LTE uses orthogonal frequency division multiplexing (OFDM) technology, and time-frequency resources composed of subcarriers and OFDM symbols constitute radio physical time-frequency resources of the LTE system. Currently, the OFDM technology has been widely applied in wireless communications. Due to the use of cyclic prefixes (Cyclic Prefix, CP), the CP-OFDM system can greatly solve multi-path delay problems, and divide frequency selective channels into a set of parallel flat channels, which greatly simplifies the channel estimation method and provides high channel estimation accuracy. However, the performance of a CP-OFDM system is relatively sensitive to a frequency offset and a time offset between adjacent sub-bands, mainly due to the large frequency spectrum leakage of the system, which easily results in interference between sub-bands. The LTE system currently uses a guard interval in the frequency domain, but this reduces frequency spectrum efficiency, so new technologies are needed to suppress out-of-band leakage.

Fifth Generation New Radio (5G NR) communication technologies still use CP-OFDM as the basic waveform, and different subcarrier spacings may be used between two adjacent sub-bands, which will destroy the orthogonality between subcarriers and bring a new interference problem. A relatively direct method to solve this interference problem is to insert a protection bandwidth between two transmission bands with different subcarrier spacings, but this will waste frequency resources.

With the development of the technologies, frequency bands used by future 6G traffics span a wide range, and deployment modes thereof also increase. This will not only require multi-bandwidth channels, but also require waveform schemes that meet different scenarios. Implementing each waveform scheme independently will increase the cost of base stations and terminals. The issues that need to be addressed are how to design a unified waveform architecture that flexibly merges multiple waveforms, and how to flexibly support applications on different channel bandwidths, to flexibly configure different sub-bands to adapt to different channel conditions, and to improve frequency spectrum efficiency.

In view of this, the embodiments of the present disclosure provide a data transmission method, including: dividing to-be-transmitted data into N first sequences; where among the N first sequences, each of M first sequences corresponds to a single-carrier subband, each of K first sequences corresponds to a multi-carrier subband, N is a positive integer, M is a positive integer less than or equal to N, and K is equal to N-M; and within a time-domain symbol length, a quantity of data of a first sequence corresponding to the multi-carrier subband is less than a quantity of data of a first sequence corresponding to the single-carrier subband; obtaining N second sequences based on the N first sequences; where the N second sequences include a sequence obtained by performing a Fourier transform on the first sequence corresponding to the single-carrier subband, a sequence obtained by performing a zero-padding operation on a first sequence corresponding to a multi-carrier subband adjacent to the single-carrier subband, and a first sequence corresponding to a multi-carrier subband non-adjacent to the single-carrier subband; performing a first inverse Fourier transform on the N second sequences to obtain N third sequences; performing a second inverse Fourier transform on the N third sequences to obtain a time-domain data sequence; and transmitting the time-domain data sequence on a transmission resource of the to-be-transmitted data.

In this way, by flexibly combining subbands of multiple data types, the cost of the base station/terminal increased by independently implementing each waveform scheme is reduced, and different subbands may be flexibly configured to adapt to different channel conditions, while supporting applications of different channel bandwidths. Within a time-domain symbol length, the quantity of data of the first sequence corresponding to the multi-carrier subband is less than the quantity of data of the first sequence corresponding to the single-carrier subband, so the single-carrier data is more than the multi-carrier data, which is more flexible; and performing the zero-padding operation on the first sequence corresponding to the multi-carrier subband adjacent to the single-carrier subband, may avoid subband interference caused by the single-carrier subband. This helps to improve spectral efficiency.

The data transmission method provided in the embodiments of the present disclosure may be applied to systems of multiple communication standards. For example, systems to which the data transmission method provided in the embodiments of the present disclosure may be applied, include, but are not limited to, an LTE system, communication systems such as various versions evolved based on the LTE system, a 5G system, etc. In addition, the data transmission method provided in the embodiments of the present disclosure may also be applied to future-oriented communication systems (e.g., a 6G communication system), etc.

A network architecture of a mobile communication network (including but not limited to 3G, 4G, 5G and future mobile communication networks) in the embodiments of the present disclosure may at least include a first communication node and a second communication node. It should be understood that, in this example, in a downlink, the first communication node may be a network-side device (including but not limited to, for example, a base station), and the second communication node may be a terminal-side device (including but not limited to, for example, a terminal). Of course, in an uplink, the first communication node may also be a terminal-side device, and the second communication node may also be a network-side device. In a device-to-device communication between two communication nodes, both the first communication node and the second communication node may be base station-side devices or terminal-side devices. The first communication node and the second communication node may be simply referred to as a first node and a second node, respectively.

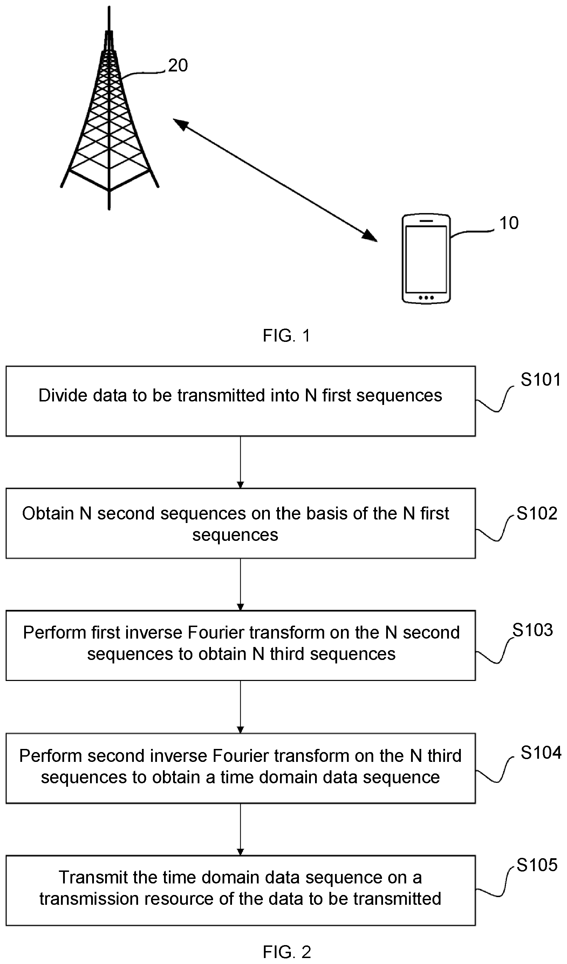

Exemplarily, taking the first communication node as a terminal and the second communication node as a base station as an example, as shown in FIG. 1, FIG. 1 illustrates a communication system provided in the embodiments of the present disclosure, and the communication system includes a terminal 10 and a base station 20. There may be one or more terminals 10 and base stations 20, and the embodiments of the present disclosure do not limit the number.

In some embodiments, the base station 20 provides radio access services to the terminal 10. A base station 20 provides at least one service coverage area (which may also be referred to as a cell). The terminal 10 entering this area may communicate with the base station 20 via wireless signals, to receive the radio access services provided by the base station 20.

In some embodiments, the base station (BS) may be a base station in LTE (long term evolution), long term evolution advanced (LTEA), or an evolutional base station (evolutional node B, eNB or eNodeB), a base station device in the 5G network, or a base station in future communication systems, and so on, and the base station may also include various macro base stations, micro base stations, home base stations, remote radio device, reconfigurable intelligent surfaces (RIS), routers, relays, transmission and reception points (TRPs), wireless fidelity (WIFI) devices, and various network side devices.

In some embodiments, the terminal may be a device with a wireless transceiver function. The terminal may be a mobile phone, a tablet computer (Pad), a computer with a wireless transceiver function, a virtual reality (VR) terminal, an augmented reality (AR) terminal, a wireless terminal in industrial control, a wireless terminal in self driving, a wireless terminal in remote medical, a wireless terminal in smart grid, a wireless terminal in transportation safety, a wireless terminal in smart city, a wireless terminal in smart home, etc. The embodiments of the present disclosure do not limit the application scenarios. The terminal sometimes may also be referred to as a user, user equipment (UE), access terminal, UE unit, UE station, mobile station, mobile platform, remote station, remote terminal, mobile device, UE terminal, wireless communication device, UE agent, UE apparatus, etc., which is not limited to the embodiments of the present disclosure.

It should be noted that FIG. 1 is only an exemplary framework diagram, and the number of devices and the names of the respective devices included in FIG. 1 are not limited, and in addition to the devices shown in FIG. 1, the communication system may also include other devices, such as a core network device.

The application scenarios are not limited in the embodiments of the present disclosure. The system architectures and service scenarios described in the embodiments of the present disclosure are intended to more clearly illustrate the technical solutions of the embodiments of the present disclosure, and do not limit the technical solutions provided in the embodiments of the present disclosure, and those ordinary skilled in the art may know that with the evolution of the network architectures and the emergence of new service scenarios, the technical solutions provided in the embodiments of the present disclosure may also be applicable for similar technical problems.

The embodiments of the present disclosure provide a data transmission method. As shown in FIG. 2, the method includes S101 to S105.

In S101: to-be-transmitted data is divided into N first sequences.

Among the N first sequences, each of M first sequences corresponds to a single-carrier subband, each of K first sequences corresponds to a multi-carrier subband, N is a positive integer, M is a positive integer less than or equal to N, and K is equal to N-M.

The K first sequences include at least a first sequence corresponding to a multi-carrier subband adjacent to a single-carrier subband and a first sequence corresponding to a multi-carrier subband non-adjacent to the single-carrier subband. For convenience of description, hereinafter, the multi-carrier subband adjacent to the single-carrier subband is referred to as a first multi-carrier subband, and the multi-carrier subband non-adjacent to the single-carrier subband is referred to as a second multi-carrier subband.

It can be understood that when the first sequence is transmitted by using the single-carrier, less power and energy are required, which may effectively reduce the power consumption and energy consumption of the transmitting end and the receiving end. When the first sequence is transmitted by using the multi-carrier scheme, the first sequence may be transmitted on multiple different carriers, thereby reducing the risk of an invalid single carrier and improving the reliability and fault tolerance of the system.

Within a time-domain symbol length, a quantity of data of a first sequence corresponding to the multi-carrier subband is less than a quantity of data of a first sequence corresponding to the single-carrier subband. The advantage of this is that the single-carrier data is more than the multi-carrier data, which is more flexible, and may enable a filter coefficient of 1 within the subband, so that the performance will not be affected due to the filter.

In some embodiments, a different subband is allocated to each first sequence of the N first sequences, so a total of N subbands are allocated, that is, the N first sequences correspond to the N subbands. The N subbands are all or a part of subbands included in a channel bandwidth.

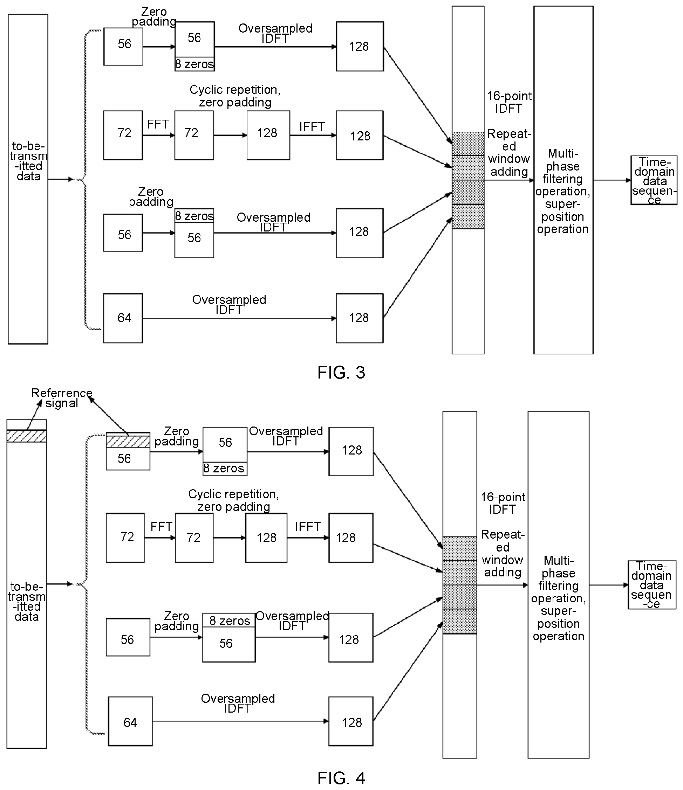

Exemplarily, as shown in FIG. 3, the to-be-transmitted data is divided into 4 first sequences, where the 1st first sequence includes 56 pieces of data, the 2nd first sequence includes 72 pieces of data, the 3rd first sequence includes 56 pieces of data, and the 4th first sequence includes 64 pieces of data. The 2nd first sequence corresponds to a single-carrier subband, and each of the other three corresponds to a multi-carrier subband. The 1st first sequence corresponds to a multi-carrier subband 1, the 2nd first sequence corresponds to a single-carrier subband 2, the 3rd first sequence corresponds to a multi-carrier subband 3, and the 4th first sequence corresponds to a multi-carrier subband 4.

In some embodiments, the N subbands satisfy, in a frequency domain, at least one of:
the N subbands are arbitrarily distributed in the frequency domain;
the N subbands are continuous in the frequency domain;
bandwidths of the N subbands are same;
M single-carrier subbands among the N subbands are non-continuous in the frequency domain.

In some embodiments, the to-be-transmitted data is all or a part of to-be-transmitted data in a channel bandwidth.

In some embodiments, the to-be-transmitted data includes modulation data and/or reference signal data.

The modulation data may be constellation point-modulated data, and the constellation point-modulated data is used to transmit user data. The reference signal data is used to help the receiving end measure a channel state, perform channel estimation and decoding. By using the reference signal data, the receiving end may more accurately demodulate and decode the signal, thereby improving the reliability and performance of the communication.

In some embodiments, in a case where the to-be-transmitted data includes reference signal data, the N first sequences carry the reference signal data.

Exemplarily, as shown in FIG. 4, it is assumed that the to-be-transmitted data includes 4 reference signal data. The to-be-transmitted data is divided into 4 first sequences, where each first sequence corresponds to a subband, and the 4 first sequences respectively include 56, 72, 56, and 64 pieces of data. The 1st first sequence corresponds to a multi-carrier subband 1, and the 1st first sequence carries the reference signal data; the 2nd first sequence corresponds to a single-carrier subband 2; the 3rd first sequence corresponds to a multi-carrier subband 3; and the 4th first sequence corresponds to a multi-carrier subband 4.

In some embodiments, the subbands corresponding to the N first sequences are all single-carrier subbands. In this case, the aforementioned M is equal to N.

In some embodiments, within a time-domain symbol length, the quantity of data of the first sequence corresponding to the first multi-carrier subband is less than the quantity of data of the first sequence corresponding to the second multi-carrier subband.

Exemplarily, continuing to refer to FIG. 3, within a time-domain symbol length, the quantity of data included in the first sequence corresponding to multi-carrier subband 1 and the quantity of data included in the first sequence corresponding to multi-carrier subband 3 are both less than the quantity of data included in the first sequence corresponding to multi-carrier subband 4.

In some embodiments, within a time-domain symbol length, the quantity of data of the first sequence corresponding to the first multi-carrier subband is less than a number of subcarriers of the first multi-carrier subband.

Exemplarily, continuing to refer to FIG. 3, within a time-domain symbol length, the quantity of data included in the first sequence corresponding to multi-carrier subband 1 is 56, the number of subcarriers of multi-carrier subband 1 is 64, and the quantity of data included in the first sequence corresponding to multi-carrier subband 1 is less than the number of subcarriers of multi-carrier subband 1. Within a time-domain symbol length, the quantity of data included in the first sequence corresponding to multi-carrier subband 3 is 56, the number of subcarriers of multi-carrier subband 3 is 64, and the quantity of data included in the first sequence corresponding to multi-carrier subband 3 is less than the number of subcarriers of multi-carrier subband 3.

In some embodiments, within a time-domain symbol length, the quantity of data of the first sequence corresponding to the second multi-carrier subband is equal to the number of subcarriers of the second multi-carrier subband.

Exemplarily, continuing to refer to FIG. 3, within a time-domain symbol length, the quantity of data included in the first sequence corresponding to multi-carrier subband 4 is 64, the number of subcarriers of multi-carrier subband 4 is 64, and the quantity of data included in the first sequence corresponding to multi-carrier subband 4 is equal to the number of subcarriers of multi-carrier subband 4.

In some embodiments, within a time-domain symbol length, the quantity of data of the first sequence corresponding to the single-carrier subband is equal to the number of subcarriers of the multi-carrier subband.

In some embodiments, within a time-domain symbol length, the quantity of data of the first sequence corresponding to the single-carrier subband is greater than the number of subcarriers of the multi-carrier subband.

Exemplarily, continuing to refer to FIG. 3, within a time-domain symbol length, the quantity of data of the first sequence corresponding to the single-carrier subband is 72, and the number of subcarriers of the multi-carrier subband is 64, therefore, within a time-domain symbol length, the quantity of data of the first sequence corresponding to the single-carrier subband is greater than the number of subcarriers of the multi-carrier subband.

In some embodiments, within a same time duration, the quantities of data of the M first sequences are the same.

In some embodiments, within a time-domain symbol length, the quantity of data of the first sequence corresponding to the single-carrier subband is an i-th power of 2, where i is an integer greater than or equal to 0.

In some embodiments, within a time-domain symbol length, the quantity of data of the first sequence corresponding to the second multi-carrier subband is a j-th power of 2, where j is an integer greater than or equal to 0.

Exemplarily, continuing to refer to FIG. 3, the quantity of data of the first sequence corresponding to multi-carrier subband 4 is the 6th power of 2.

A time-domain symbol length mentioned above may be an OFDM symbol time length.

In some embodiments, the embodiments of the present disclosure do not limit configurations of the K multi-carrier subbands corresponding to the K first sequences. For example, subcarrier spacings of the K multi-carrier subbands may be the same or may be different. For another example, the numbers of subcarriers of the K multi-carrier subbands may be the same or may be different.

In some embodiments, the subband is a single-carrier subband, and a center frequency point of the subband is located at a center of the single-carrier subband.

In some embodiments, data in the first sequence corresponding to the first multi-carrier subband is mapped onto subcarriers in the first multi-carrier subband that are not adjacent to the single-carrier subband, and data mapped onto subcarriers in the first multi-carrier subband that are adjacent to the single-carrier subband is 0. In this way, at the border of the single-carrier subband and the multi-carrier subband, since the single-carrier may generate subband interference, mapping to 0 on the subcarriers adjacent to the single-carrier subband is performed to avoid the interference, while using other subcarrier parts without interference, thereby improving the spectral efficiency.

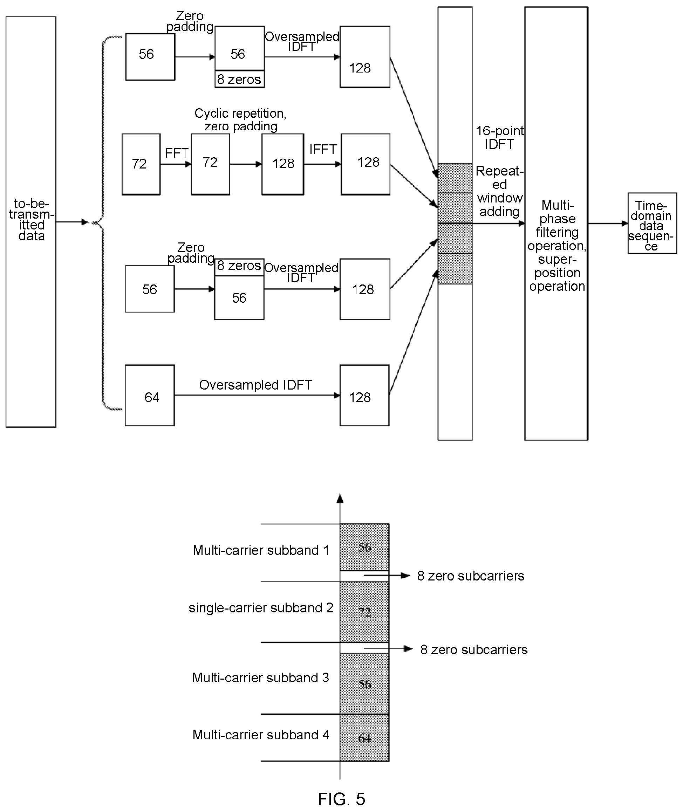

Exemplarily, as shown in FIG. 5, the to-be-transmitted data is divided into 4 first sequences, where the 1st first sequence includes 56 pieces of data, the 2nd first sequence includes 72 pieces of data, the 3rd first sequence includes 56 pieces of data, and the 4th first sequence includes 64 pieces of data. Data in the first sequences corresponding to multi-carrier subband 1 and multi-carrier subband 3 is respectively mapped onto subcarriers in multi-carrier subband 1 and multi-carrier subband 3 that are not adjacent to single-carrier subband 2, and data mapped onto 8 subcarriers in multi-carrier subband 1 that are adjacent to single-carrier subband 2 is 0, and data mapped onto 8 subcarriers in multi-carrier subband 3 that are adjacent to single-carrier subband 2 is 0.

In some embodiments, both sides of the multi-carrier subband are adjacent to two single-carrier subbands respectively, and the multi-carrier subband is used to transmit data, or is not used to transmit data.

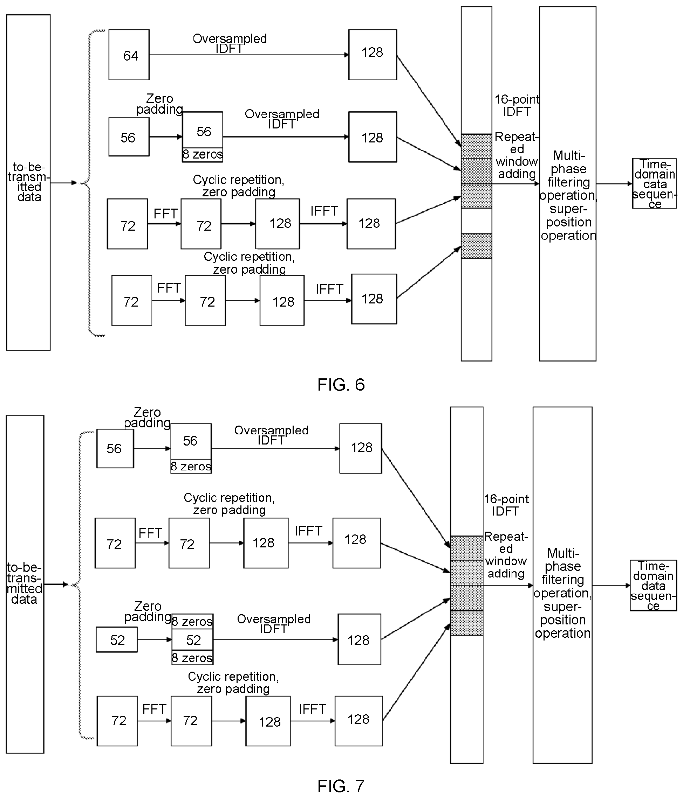

Exemplarily, as shown in FIG. 6, the to-be-transmitted data is divided into 4 first sequences, where the 1st first sequence includes 64 pieces of data, the 2nd first sequence includes 56 pieces of data, the 3rd first sequence includes 72 pieces of data, and the 4th first sequence includes 72 pieces of data. The 1st first sequence corresponds to a multi-carrier subband 1, the 2nd first sequence corresponds to a multi-carrier subband 2, the 3rd first sequence corresponds to a single-carrier subband 3, and the 4th first sequence corresponds to a single-carrier subband 4; a multi-carrier subband between the single-carrier subband 3 and single-carrier subband 4 is not used to transmit data.

For another example, as shown in FIG. 7, the to-be-transmitted data is divided into 4 first sequences, where the 1st first sequence includes 56 pieces of data, the 2nd first sequence includes 72 pieces of data, the 3rd first sequence includes 52 pieces of data, and the 4th first sequence includes 72 pieces of data. The 1st first sequence corresponds to a multi-carrier subband 1, the 2nd first sequence corresponds to a single-carrier subband 2, the 3rd first sequence corresponds to a multi-carrier subband 3, and a 4th first sequence corresponds to a single-carrier subband 4. A multi-carrier subband between the single-carrier subband 2 and single-carrier subband 4 is used to transmit data.

In S102: N second sequences are obtained based on the N first sequences.

The N second sequences include a sequence obtained by performing a Fourier transform on the first sequence corresponding to the single-carrier subband, a sequence obtained by performing a zero-padding operation on a first sequence corresponding to a first multi-carrier subband, and a first sequence corresponding to a second multi-carrier subband. The Fourier transform includes at least a fast Fourier transform (fast fourier transform, FFT).

In some embodiments, performing the zero-padding operation on the first sequence corresponding to the first multi-carrier subband includes: in a case where only one side of the first multi-carrier subband is adjacent to the single-carrier subband, performing the zero-padding operation on a side adjacent to the single-carrier subband in the first sequence corresponding to the first multi-carrier subband; or, in a case where both sides of the first multi-carrier subband are respectively adjacent to the single-carrier subband, performing the zero-padding operation on both sides of the first sequence corresponding to the first multi-carrier subband. In this way, since the single-carrier may generate subband interference, on a border of the single-carrier subband and the multi-carrier subband, zero-padding is performed on the multi-carrier subband to avoid the interference, while using other subcarrier parts without interference, thereby improving spectral efficiency.

In some embodiments, a number of padded zeros in the zero-padding operation satisfies a positive correlation with a roll-off factor of a filter of the single-carrier subband adjacent to the first multi-carrier subband. In this way, the zero-padding is performed on data in the adjacent subbands that is affected by the roll-off part of the filter, thereby avoiding inter-subband interference.

Exemplarily, continuing to refer to FIG. 3, the multi-carrier subband 1 corresponding to the 1st first sequence and the multi-carrier subband 3 corresponding to the 3rd first sequence are adjacent to the single-carrier subband 2 corresponding to the 2nd first sequence, and the roll-off factor of the filter of the single-carrier subband 2 is 1/9; 8 zero subcarriers are added to a side of the multi-carrier subband 1 adjacent to the single-carrier subband 2, to obtain a second sequence corresponding to the multi-carrier subband 1, with a quantity of data being 64; 8 zero subcarriers are added to a side of the multi-carrier subband 3 adjacent to the single-carrier subband 2, to obtain a second sequence corresponding to the multi-carrier subband 3, with a quantity of data being 64. The FFT is performed on the first sequence corresponding to the single-carrier subband 2, to obtain a second sequence corresponding to the single-carrier subband 2, with a quantity of data being 72. The first sequence corresponding to the multi-carrier subband 4 is taken as a second sequence corresponding to the multi-carrier subband 4, with a quantity of data being 64.

For another example, as shown in FIG. 7, the to-be-transmitted data is divided into 4 first sequences, where the 1st first sequence includes 56 pieces of data, the 2nd first sequence includes 72 pieces of data, the 3rd first sequence includes 52 pieces of data, and the 4th first sequence includes 72 pieces of data. The 1st first sequence corresponds to a multi-carrier subband 1, the 2nd first sequence corresponds to a single-carrier subband 2, the 3rd first sequence corresponds to a multi-carrier subband 3, and the 4th first sequence corresponds to a single-carrier subband 4. A roll-off factor of a filter of the single-carrier subband 3 is 1/9, and a roll-off factor of a filter of the single-carrier subband 4 is 1/9.

The first sequence corresponding to the multi-carrier subband 1 is adjacent to a side of the single-carrier subband 2; 8 zero subcarriers are added to a side of the first sequence corresponding to the multi-carrier subband 1, that is adjacent to the single-carrier subband 2, to obtain a second sequence corresponding to the multi-carrier subband 1.

The first sequence corresponding to the multi-carrier subband 3 is adjacent to a side of the single-carrier subband 2 and adjacent to a side of the single-carrier subband 4; 8 zero subcarriers are added to a side of the first sequence corresponding to the multi-carrier subband 3 that is adjacent to the single-carrier subband 2, and 8 zero subcarriers are added to another side of the first sequence corresponding to the multi-carrier subband 3 that is adjacent to the single-carrier subband 4. The FFT is performed on the first sequence corresponding to the single-carrier subband 2 and the first sequence corresponding to the single-carrier subband 4 respectively, to obtain a second sequence corresponding to the single-carrier subband 2 and a second sequence corresponding to the single-carrier subband 4.

In S103: a first inverse Fourier transform is performed on the N second sequences, to obtain N third sequences.

In some embodiments, performing the first inverse Fourier transform on the N second sequences is performing the first inverse Fourier transform on data within a time-domain symbol in the N second sequences respectively.

In some embodiments, the first inverse Fourier transform is an oversampled inverse Fourier transform.

In some embodiments, the first inverse Fourier transform includes at least an oversampled inverse discrete Fourier transform (inverse discrete fourier transform, IDFT) and an inverse fast Fourier transform (inverse fast fourier transform, IFFT).

In some embodiments, the second sequence corresponding to the first multi-carrier subband is obtained by performing the zero-padding operation on the first sequence corresponding to the first multi-carrier subband, the first inverse Fourier transform performed on the second sequence corresponding to the first multi-carrier subband is the oversampled inverse Fourier transform to obtain a third sequence corresponding to the first multi-carrier subband, and a quantity of data of the obtained third sequence corresponding to the first multi-carrier subband is twice a number of subcarriers of the first multi-carrier subband.

In some embodiments, the second sequence corresponding to the second multi-carrier subband is obtained by performing the zero-padding operation on the first sequence corresponding to the second multi-carrier subband, the first inverse Fourier transform performed on the second sequence corresponding to the second multi-carrier subband is the oversampled inverse Fourier transform to obtain a third sequence corresponding to the second multi-carrier subband, and a quantity of data of the obtained third sequence corresponding to the second multi-carrier subband is twice a number of subcarriers of the second multi-carrier subband.

In some embodiments, a number of transform points of the first inverse Fourier transform satisfies an i-th power of 2, where i is an integer greater than or equal to 0.

In some embodiments, in a case where subcarrier spacings of two subbands are the same, a same number of transform points is used for the first inverse Fourier transform performed on second sequences corresponding to the two subbands.

In some embodiments, a zero-frequency position of the first inverse Fourier transform performed on the second sequence is located within a subband corresponding to the second sequence, or a zero-frequency position of the first inverse Fourier transform performed on the second sequence is located on a subcarrier within a subband corresponding to the second sequence.

Exemplarily, a zero-frequency position of the first inverse Fourier transform performed on the second sequence is located at one of subcarriers within the subband corresponding to the second sequence.

In some embodiments, performing the first inverse Fourier transform on the N second sequences to obtain the N third sequences, includes: performing a cyclic repetition on partial data of a second sequence corresponding to the single-carrier subband, to obtain a fourth sequence, where a length of the fourth sequence is twice a quantity of data of the second sequence corresponding to the multi-carrier subband; and performing the first inverse Fourier transform on the fourth sequence to obtain a third sequence corresponding to the single-carrier subband, where a length of the third sequence corresponding to the single-carrier subband is twice the quantity of data of the second sequence corresponding to the multi-carrier subband.

In some embodiments, performing the first inverse Fourier transform on the N second sequences to obtain the N third sequences, includes: performing a cyclic repetition on partial data of a second sequence corresponding to the single-carrier subband, to obtain a fifth sequence, where a length of the fifth sequence is less than twice a quantity of data of the second sequence corresponding to the multi-carrier subband; and performing an oversampled first inverse Fourier transform on the fifth sequence to obtain a third sequence corresponding to the single-carrier subband, where a length of the third sequence corresponding to the single-carrier subband is twice the quantity of data of the second sequence corresponding to the multi-carrier subband.

Exemplarily, continuing to refer to FIG. 3, the oversampled IDFT is performed on the second sequence corresponding to the multi-carrier subband 1, the second sequence corresponding to the multi-carrier subband 3, and the second sequence corresponding to the multi-carrier subband 4, respectively, to obtain a third sequence corresponding to the multi-carrier subband 1, a third sequence corresponding to the multi-carrier subband 3, and a third sequence corresponding to the multi-carrier subband 4. After performing the cyclic repetition of partial data and zero-padding operation of the second sequence corresponding to the single-carrier subband 2, a fourth sequence corresponding to the single-carrier subband 2 is obtained, with a quantity of data being 128; the IFFT is performed on the fifth sequence corresponding to the single-carrier subband 2 to obtain a third sequence corresponding to the single-carrier subband 2, where a quantity of data of each third sequence is 128.

In S104: a second inverse Fourier transform is performed on the N third sequences to obtain a time-domain data sequence.

The second inverse Fourier transform is a subband-level inverse Fourier transform.

In some embodiments, a number of transform points of the second inverse Fourier transform is greater than N.

In some embodiments, the second inverse Fourier transform at least includes an oversampled IDFT.

In some embodiments, performing the second inverse Fourier transform on the N third sequences together to obtain the time-domain data sequence, includes: arranging the N third sequences row by row to obtain a data matrix; extracting a plurality of seventh sequences column by column from the data matrix, each seventh sequence of the plurality of seventh sequences including N pieces of data; performing the second inverse Fourier transform on each of the plurality of seventh sequences to obtain a plurality of time-domain data subsequences; and forming the time-domain data sequence based on the plurality of time-domain data subsequences.

In some embodiments, the time-domain data sequence is formed by concatenating the plurality of time-domain data subsequences.

In some embodiments, a concatenation interval between two of the time-domain data subsequences is half of a length of the time-domain data subsequence.

Exemplarily, 4 third sequences are arranged row by row to obtain a data matrix; a plurality of seventh sequences are extracted from the data matrix column by column, where each seventh sequence of the plurality of seventh sequences includes 4 pieces of data; the second inverse Fourier transform is performed on the plurality of seventh sequences respectively, to obtain a plurality of time-domain data subsequences; a time-domain data sequence is formed based on the plurality of time-domain data subsequences, where the concatenation interval between two time-domain data subsequences is 2.

In some embodiments, performing the second inverse Fourier transform on the N third sequences to obtain the time-domain data sequence, includes: acquiring P sixth sequences, P being a positive integer; and performing the second inverse Fourier transform on the N third sequences and the P sixth sequences together to obtain the time-domain data sequence.

In some embodiments, data included in the P sixth sequences is other data other than the to-be-transmitted data.

In some embodiments, performing the second inverse Fourier transform on the N third sequences to obtain the time-domain data sequence, includes: acquiring P sixth sequences, P being a positive integer; performing a zero-padding operation and/or an inverse Fourier transform operation on the P sixth sequences respectively, to obtain P eighth sequences, a quantity of data included in each eighth sequence of the P eighth sequences is twice the number of subcarriers corresponding to the multi-carrier subband; performing the second inverse Fourier transform on the N third sequences and the P eighth sequences together, to obtain the time-domain data sequence.

In some embodiments, before performing the second inverse Fourier transform on the N third sequences, other operations, for example, a cyclic prefix-adding operation, are also included.

In S105: the time-domain data sequence is transmitted on a transmission resource of the to-be-transmitted data.

In some embodiments, the N subbands included in the transmission resource of the to-be-transmitted data are all or part of subbands included in the channel bandwidth, and the N subbands are subbands corresponding to the N first sequences.

In some embodiments, before transmitting a time-domain data sequence on the transmission resource of the to-be-transmitted data, a filtering operation and/or a window adding operation is performed on the time-domain data sequence, where the filtering operation is single-phase filtering or multi-phase filtering.

In some embodiments, the window adding operation includes: grouping the time-domain data sequence, performing periodic extension, then performing dot multiplication with a preset function, and then performing staggered superposition among the groups.

In some embodiments, a filter function used in multi-phase filtering includes at least one of: a root raised cosine function, a raised cosine function, a rectangular function, and an isotropic orthogonal transform algorithm (IOTA) function.

In some embodiments, the filtering operation satisfies at least one of:
a coefficient of a filter corresponding to the filtering operation being a preset value;
a width of a filter corresponding to the filtering operation being greater than a bandwidth of a subband corresponding to the filtering operation.

In some embodiments, parameters of filters corresponding to different subbands among the N subbands are the same.

Exemplarily, the coefficient of the filter corresponding to the filtering operation is 1 within a subband.

In some embodiments, DAC and/or RF is further performed on a time-domain data sequence obtained by performing a filtering operation and/or a window adding operation on the time-domain data sequence. DAC (digital to analog converter) is a conversion from a digital signal to an analog signal. In the time domain, this involves converting digital data into a continuous analog waveform. For example, you may have a digital data sequence representing music or speech, and through the DAC, the data is converted into an analog signal, so that it may be played or transmitted. RF (radio frequency) refers to radio frequency signal processing. In the wireless communication, the information is modulated onto a highfrequency radio wave and then sent out.

Exemplarily, continuing to refer to FIG. 3, FIG. 4, or FIG. 5, 8 zero subcarriers are added to the end of the 1st first sequence to obtain the second sequence corresponding to the multi-carrier subband 1, and 8 zero subcarriers are added to the front of the 3rd first sequence to obtain the second sequence corresponding to the multi-carrier subband 3, respectively; then, the oversampled IDFT is performed on the second sequence corresponding to the multi-carrier subband 1, the second sequence corresponding to the multi-carrier subband 3, and the 4th first sequence respectively, to form 3 third sequences, where a quantity of data included in each third sequence of the 3 third sequences is 128. The FFT is performed on the 2nd first sequence, then the cyclic repetition and zero-padding operations are performed respectively, and then the IFFT is performed respectively, to form a third sequence including 128 pieces of data; then, the 16-point IDFT, repeated window adding, multi-phase filtering operation, and superposition operation are performed on data of the 4 third sequences, where a filter bandwidth is 72 times the subcarrier spacing, and the roll-off factor is 0.11 (1/9), to form the time-domain data sequence. The time-domain data sequence is transmitted on a time-frequency resource.

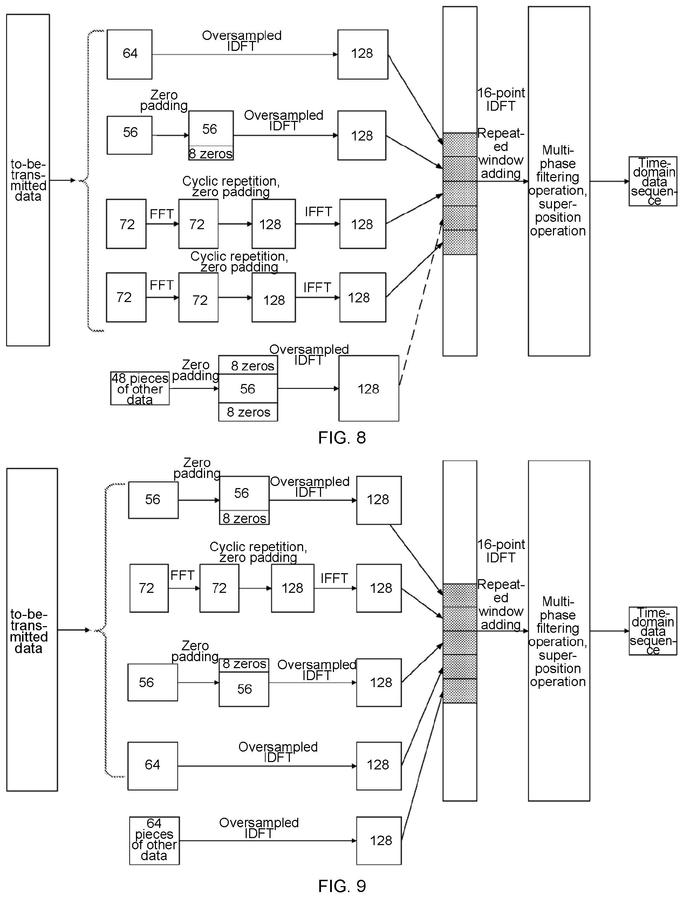

Exemplarily, continuing to refer to FIG. 6, 8 zero subcarriers are added to the end of the first sequence corresponding to the multi-carrier subband 2 to obtain the second sequence corresponding to the multi-carrier subband 2; then the oversampled IDFT is performed on the 1st first sequence and the second sequence corresponding to the multi-carrier subband 2 respectively to form 2 third sequences, where a quantity of data included in each third sequence of the 2 third sequences is 128. The FFT is performed on the 3rd first sequence and the 4th first sequence respectively, then the cyclic repetition and zero-padding operations are performed respectively, and then the inverse Fourier transform is performed respectively to form 2 third sequences, where a quantity of data included in each third sequence of the 2 third sequences is 128. Then, the 16-point IDFT, repeated window adding, multi-phase filtering operation, and superposition operation are performed on the above 4 third sequences together, where a filter bandwidth is 72 times the subcarrier spacing, and the roll-off factor is 0.11 (1/9), to form a time-domain data sequence. The time-domain data sequence is transmitted on a transmission resource of the to-be-transmitted data.

Exemplarily, continuing to refer to FIG. 7, the oversampled IDFT is performed on the second sequence corresponding to the multi-carrier subband 1 and the second sequence corresponding to the multi-carrier subband 3 respectively, to obtain a third sequence corresponding to the multi-carrier subband 1 and a third sequence corresponding to the multi-carrier subband 3; the cyclic repetition and zero-padding operations are performed on the second sequence corresponding to the single-carrier subband 2, and then IFFT is performed to obtain a third sequence including 128 pieces of data corresponding to the carrier subband 2; the cyclic repetition and zero-padding operations are performed on the second sequence corresponding to the single-carrier subband 4, and then IFFT is performed to obtain a third sequence including 128 pieces of data corresponding to carrier subband 4; the 16-point IDFT, repeated window adding, multi-phase filtering operation, and superposition operation are performed on the above 4 third sequences together, where a filter bandwidth is 72 times the subcarrier spacing, and the roll-off factor is 0.11 (1/9), to form a time-domain data sequence. The time-domain data sequence is transmitted on a transmission resource of the to-be-transmitted data.

Exemplarily, as shown in FIG. 8, the to-be-transmitted data is divided into 4 first sequences, each first sequence of the 4 first sequences corresponds to a subband, and the 4 first sequences include 64, 56, 72, and 72 pieces of data, respectively. The 1st first sequence corresponds to a multi-carrier subband 1, the 2nd first sequence corresponds to a multi-carrier subband 2, the 3rd first sequence corresponds to a single-carrier subband 3, and the 4th first sequence corresponds to a single-carrier subband 4. 8 zero subcarriers are added to the end of the first sequence corresponding to the multi-carrier subband 2 to obtain a second sequence corresponding to the multi-carrier subband 2; then the oversampled IDFT is performed on the 1st first sequence and the second sequence corresponding to the multi-carrier subband 2 respectively, to form 2 third sequences, where a quantity of data included in each third sequence of the 2 third sequences is 128. The FFT is performed on the 3rd first sequence and the 4th first sequence respectively, then the cyclic repetition and zero-padding operations are performed, and finally, the IFFT is performed to form 2 third sequences, where a quantity of data included in each third sequence of the 2 third sequences is 128. A sixth sequence is added to the 3rd first sequence and the 4th third sequence, where the sixth sequence includes 48 pieces of other data; an operation of padding 8 zero subcarriers to two sides of the sixth sequence respectively and then an inverse Fourier transform is performed to obtain an eighth sequence. Then, the 16-point IDFT, repeated window adding, multi-phase filtering operation, and superposition operation are performed on the above 4 third sequences and the eighth sequence, where a filter bandwidth is 72 times the subcarrier spacing, and the roll-off factor is 0.11 (1/9), to form a time-domain data sequence. The time-domain data sequence is transmitted on a transmission resource of the to-be-transmitted data.

In another example, referring to FIG. 9, the to-be-transmitted data is divided into 4 first sequences, each first sequence of the 4 first sequences corresponds to a subband, and the 4 first sequences include 56, 72, 56, and 64 pieces of data, respectively. The 1st first sequence corresponds to a multi-carrier subband 1, the 2nd first sequence corresponds to a single-carrier subband 2, the 3rd first sequence corresponds to a multi-carrier subband 3, and the 4th first sequence corresponds to a multi-carrier subband 4. After adding 8 zero subcarriers to the end of the first sequence corresponding to the multi-carrier subband 1, the oversampled IDFT is performed to obtain a third sequence corresponding to the multi-carrier subband 1; after adding 8 zero subcarriers to the end of the first sequence corresponding to the multi-carrier subband 3, the oversampled IDFT is performed to obtain a third sequence corresponding to the multi-carrier subband 3; the FFT, cyclic repetition, zero-padding operation, and IFFT are performed on the first sequence corresponding to the single-carrier subband 2 to obtain a third sequence corresponding to the single-carrier subband 2; the oversampled IDFT is performed on the first sequence corresponding to the multi-carrier subband 4 to obtain a third sequence corresponding to the multi-carrier subband 4. A quantity of data included in each third sequence is 128. A sixth sequence including 64 pieces of other data is acquired, the oversampled IDFT is performed on the sixth sequence to obtain data including 128 pieces of data, on which the 16-point IDFT, repeated window adding, multi-phase filtering operation, and superposition operation are performed together with the above 4 third sequences, where a filter bandwidth is 72 times the subcarrier spacing, the roll-off factor is 0.11 (1/9), to form a time-domain data sequence. The time-domain data sequence is transmitted on a transmission resource of the to-be-transmitted data.

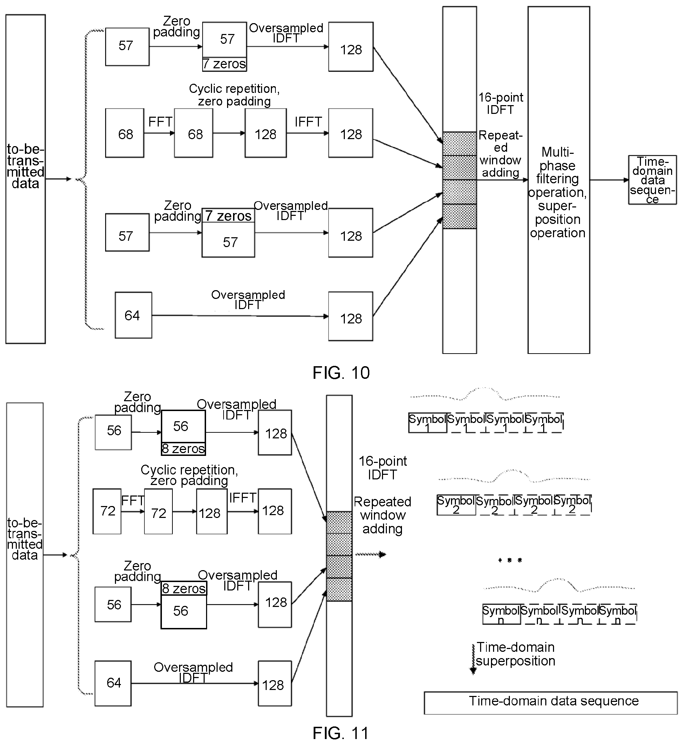

For another example, as shown in FIG. 10, the to-be-transmitted data is divided into 4 first sequences, each first sequence of the 4 first sequences corresponds to a subband, and the 4 first sequences include 57, 68, 57, and 64 pieces of data, respectively. The 1st first sequence corresponds to a multi-carrier subband 1, the 2nd first sequence corresponds to a single-carrier subband 2, the 3rd first sequence corresponds to a multi-carrier subband 3, and the 4th first sequence corresponds to a multi-carrier subband 4. Seven zero subcarriers are added to the end of the 1st first sequence to obtain a second sequence corresponding to the multi-carrier subband 1, and seven zero subcarriers are added to the front of the 3rd first sequence to obtain a second sequence corresponding to the multi-carrier subband 3; then the oversampled IDFT is performed on the second sequences corresponding to the multi-carrier subband 1 and multi-carrier subband 3, and the 4th first sequence, respectively, to form 3 third sequences, where a quantity of data included in each third sequence of the 3 third sequences is 128. The FFT is performed on the 2nd first sequence, then the cyclic repetition and zero-padding operations are performed, and finally, the IFFT is performed to form a third sequence including 128 pieces of data; then the 16-point IDFT, repeated window adding, multi-phase filtering operation, and superposition operation are performed on data of the 4 third sequences, where a filter bandwidth is 68 times the subcarrier spacing, the roll-off factor is 0.15, to form a time-domain data sequence. The time-domain data sequence is transmitted on a time-frequency resource.

For another example, as shown in FIG. 11, the to-be-transmitted data is divided into 4 first sequences, each first sequence of the 4 first sequences corresponds to a subband, and the 4 first sequences include 56, 72, 56, and 64 pieces of data, respectively. The 1st first sequence corresponds to a multi-carrier subband 1, the 2nd first sequence corresponds to a single-carrier subband 2, the 3rd first sequence corresponds to a multi-carrier subband 3, and the 4th first sequence corresponds to a multi-carrier subband 4. 8 zero subcarriers are added to the end of the 1st first sequence to obtain a second sequence corresponding to the multi-carrier subband 1, and 8 zero subcarriers are added to the front of the 3rd first sequence to obtain a second sequence corresponding to the multi-carrier subband 3; then the oversampled IDFT is performed on the second sequences corresponding to the multi-carrier subband 1 and the carrier subband 3 and the 4th first sequence respectively to form 3 third sequences, where a quantity of data included in each third sequence of the 3 third sequences is 128. The FFT is performed on the 2nd first sequence, then the cyclic repetition and zero-padding operations are performed, and finally, the IFFT is performed to form a third sequence including 128 pieces of data; then the 4 third sequences are arranged row by row to obtain a data matrix; a plurality of seventh sequences are extracted from the data matrix column by column, where each seventh sequence of the plurality of seventh sequences includes 4 pieces of data; the 16-point IDFT, repeated window adding, and multi-phase filtering operation are performed on the plurality of seventh sequences respectively, to obtain a plurality of time-domain data subsequences; time-domain superposition is performed on the plurality of time-domain data subsequences to obtain a time-domain data sequence, that is, the time-domain data sequence is formed by concatenating the plurality of time-domain data subsequences, where a concatenation interval of two time-domain data subsequences is half of a length of the time-domain data subsequence.

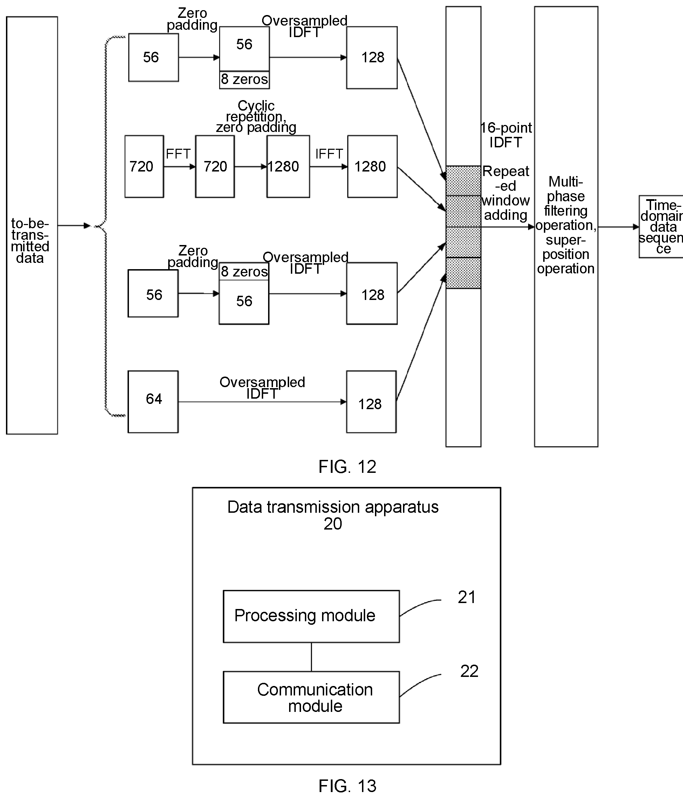

In another example, as shown in FIG. 12, the to-be-transmitted data is divided into 4 first sequences, each first sequence of the 4 first sequences corresponds to a subband, the 4 first sequences include 56, 720, 56, and 64 pieces of data, respectively, and a first group contains 4 reference signals. The 1st first sequence corresponds to a multi-carrier subband 1, the 2nd first sequence corresponds to a single-carrier subband 2, the 3rd first sequence corresponds to a multi-carrier subband 3, and the 4th first sequence corresponds to a multi-carrier subband 4. 8 zero subcarriers are added to the end of the 1st first sequence to obtain a second sequence corresponding to the multi-carrier subband 1, and 8 zero subcarriers are added to the front of the 3rd first sequence to obtain a second sequence corresponding to the multi-carrier subband 3; then the oversampled IDFT is performed on the second sequences corresponding to the multi-carrier subband 1 and multi-carrier subband 3, and the 4th first sequence, respectively, to form 3 third sequences, where a quantity of data included in each third sequence of the 3 third sequences is 128. The FFT is performed on the 2nd first sequence, then the cyclic repetition and zero-padding operation are performed, and finally, the IFFT is performed to form a third sequence including 1280 pieces of data; then the 16-point IDFT, repeated window adding, multi-phase filtering operation, and superposition operation are performed on data of the 4 third sequences, where a filter bandwidth is 72 times the subcarrier spacing, the roll-off factor is 0.11 (1/9), to form a time-domain data sequence. The time-domain data sequence is transmitted on a time-frequency resource.

Based on this, by flexibly combining subbands of multiple data types, the cost of the base station/terminal increased by independently implementing each waveform scheme is reduced, and different subbands may be flexibly configured to adapt to different channel conditions, while supporting applications of different channel bandwidths. Within a time-domain symbol length, the quantity of data of the first sequence corresponding to the multi-carrier subband is less than the quantity of data of the first sequence corresponding to the single-carrier subband, so the single-carrier data is more than the multi-carrier data, which is more flexible; and performing the zero-padding operation on the first sequence corresponding to the multi-carrier subband adjacent to the single-carrier subband, may avoid subband interference caused by the single-carrier subband. This helps to improve spectral efficiency.

In some embodiments, a channel bandwidth includes W subbands, each subband has a same width, the W subbands include a single-carrier subband and a multi-carrier subband, M subbands are single-carrier data, N-M subbands are multi-carrier subbands, where W>=N. Within a time-domain symbol length, a quantity of data in a first sequence corresponding to a multi-carrier adjacent to a single-carrier is less than a number of subcarriers of the multi-carrier subband; a quantity of data in a first sequence corresponding to a multi-carrier non-adjacent to the single-carrier is equal to a number of subcarriers of the multi-carrier subband; a quantity of data in a first sequence corresponding to the single-carrier is greater than the number of subcarriers of the multi-carrier subband. In this way, the single-carrier data is more than the multi-carrier data, which is more flexible.

The above introduces the solutions of the embodiments of the present disclosure mainly from the perspective of the methods. A data transmission apparatus is also illustrated below, for performing the data transmission method in any of the above embodiments and possible implementations thereof. It can be understood that the data transmission apparatus includes the corresponding hardware structures and/or software modules for performing the respective functions, to implement the data transmission method; and those skilled in the art should easily recognize that the present disclosure can be implemented in the form of hardware or a combination of hardware and computer software, in conjunction with the algorithmic steps of the respective examples described in the embodiments of the present disclosure. Whether a certain function is performed by hardware or computer software-driven hardware depends on the specific application and design constraints of the technical solutions. Professional technicians may use different methods to implement the described functions, for each specific application, but such an implementation should not be considered beyond the scope of the present disclosure.

In the embodiments of the present disclosure, the data transmission apparatus may be divided into functional modules according to the above-mentioned method embodiments, and for example, each functional module may be divided corresponding to each function, or two or more functions may be integrated into one functional module. The above-mentioned integrated module may be implemented in the form of hardware or may be implemented in the form of software. It should be noted that the division of modules in the embodiments of the present disclosure is illustrative, and is merely a kind of logical functional division, and there may be other division methods in actual implementations. The example in which each functional module may be divided corresponding to each function is taken for explanation below.

FIG. 13 is a data transmission apparatus provided in the embodiments of the present disclosure, which is applied to a first communication node. The data transmission apparatus 20 includes: a processing module 21 and a communication module 22.

The processing module 21 is configured to divide to-be-transmitted data into N first sequences; where among the N first sequences, each of M first sequences corresponds to a single-carrier subband, each of K first sequences corresponds to a multi-carrier subband, N is a positive integer, M is a positive integer less than or equal to N, and K is equal to N-M; and within a time-domain symbol length, a quantity of data of a first sequence corresponding to the multi-carrier subband is less than a quantity of data of a first sequence corresponding to the single-carrier subband.

The processing module 21 is further configured to obtain N second sequences based on the N first sequences; where the N second sequences include a sequence obtained by performing a Fourier transform on the first sequence corresponding to the single-carrier subband, a sequence obtained by performing a zero-padding operation on a first sequence corresponding to a multi-carrier subband adjacent to the single-carrier subband, and a first sequence corresponding to a multi-carrier subband non-adjacent to the single-carrier subband.

The processing module 21 is further configured to perform a first inverse Fourier transform on the N second sequences to obtain N third sequences.

The processing module 21 is further configured to perform a second inverse Fourier transform on the N third sequences to obtain a time-domain data sequence.

The communication module 22 is configured to transmit the time-domain data sequence on a transmission resource of the to-be-transmitted data.

In some embodiments, N subbands included in the transmission resource of the to-be-transmitted data are all or a part of subbands included in a channel bandwidth, and the N subbands are subbands corresponding to the N first sequences.

In some embodiments, the N subbands satisfy, in a frequency domain, at least one of:
the N subbands are arbitrarily distributed in the frequency domain;
the N subbands are continuous in the frequency domain;
bandwidths of the N subbands are same;
M single-carrier subbands among the N subbands are non-continuous in the frequency domain.

In some embodiments, both sides of the multi-carrier subband are adjacent to two single-carrier subbands respectively, and the multi-carrier subband is used for transmitting data or not used for transmitting data.

In some embodiments, within a time-domain symbol length, the quantity of data of the first sequence corresponding to the multi-carrier subband adjacent to the single-carrier subband is less than the quantity of data of the first sequence corresponding to the multi-carrier subband non-adjacent to the single-carrier subband.

In some embodiments, within a time-domain symbol length, the quantity of data of the first sequence corresponding to the multi-carrier subband adjacent to the single-carrier subband is less than a number of subcarriers of the multi-carrier subband adjacent to the single-carrier subband, the quantity of data of the first sequence corresponding to the multi-carrier subband non-adjacent to the single-carrier subband is equal to a number of subcarriers of the multi-carrier subband non-adjacent to the single-carrier subband, and the quantity of data of the first sequence corresponding to the single-carrier subband is greater than the number of subcarriers of the multi-carrier subband.

In some embodiments, within a same time duration, quantities of data of the M first sequences are same.

In some embodiments, within a time-domain symbol length, the quantity of data of the first sequence corresponding to the single-carrier subband is an i-th power of 2, i being an integer greater than or equal to 0; and the quantity of data of the first sequence corresponding to the multi-carrier subband non-adjacent to the single-carrier subband is a j-th power of 2, j being an integer greater than or equal to 0.

In some embodiments, the subband is a single-carrier subband, and a center frequency point of the subband is located at a center of the single-carrier subband.

In some embodiments, the processing module 21 is configured to: in response that only one side of the multi-carrier subband adjacent to the single-carrier subband is adjacent to the single-carrier subband, perform the zero-padding operation on the side adjacent to the single-carrier subband in the first sequence corresponding to the multi-carrier subband adjacent to the single-carrier subband; or, in response that both sides of the multi-carrier subband adjacent to the single-carrier subband are adjacent to the single-carrier subband respectively, perform the zero-padding operation on both sides of the first sequence corresponding to the multi-carrier subband adjacent to the single-carrier subband.

In some embodiments, a number of padded zeros of the zero-padding operation satisfies a positive correlation with a roll-off factor of a filter of a single-carrier subband that is adjacent to the multi-carrier subband adjacent to the single-carrier subband.

In some embodiments, data in the first sequence corresponding to the multi-carrier subband adjacent to the single-carrier subband is mapped onto subcarriers non-adjacent to the single-carrier subband, within the multi-carrier subband adjacent to the single-carrier subband, and data mapped onto subcarriers adjacent to the single-carrier subband, within the multi-carrier subband adjacent to the single-carrier subband, is 0.

In some embodiments, the first inverse Fourier transform is to perform a transform on data within a time-domain symbol in a sequence.

In some embodiments, the first inverse Fourier transform is an oversampled inverse Fourier transform.

In some embodiments, a number of transform points of the first inverse Fourier transform satisfies an i-th power of 2, i being an integer greater than or equal to 0.

In some embodiments, in response that subcarrier spacings of two subbands are same, a same number of transform points is used for the first inverse Fourier transform performed on second sequences corresponding to the two subbands.

In some embodiments, a zero-frequency position of the first inverse Fourier transform performed on the second sequence is located within a subband corresponding to the second sequence, or a zero-frequency position of the first inverse Fourier transform performed on the second sequence is located on a subcarrier within a subband corresponding to the second sequence.

In some embodiments, the processing module 21 is configured to: perform a cyclic repetition on partial data of a second sequence corresponding to the single-carrier subband, to obtain a fourth sequence; and perform the first inverse Fourier transform on the fourth sequence to obtain a third sequence corresponding to the single-carrier subband.

In some embodiments, the processing module 21 is configured to: perform a cyclic repetition on partial data of a second sequence corresponding to the single-carrier subband, to obtain a fifth sequence; and perform an oversampled first inverse Fourier transform on the fifth sequence to obtain a third sequence corresponding to the single-carrier subband.

In some embodiments, a number of transform points of the second inverse Fourier transform is greater than N.

In some embodiments, the communication module 22 is configured to: acquire P sixth sequences, P being a positive integer; and perform the second inverse Fourier transform on the N third sequences and the P sixth sequences together to obtain the time-domain data sequence.

In some embodiments, the processing module 21 is configured to: arrange the N third sequences row by row to obtain a data matrix; extract a plurality of seventh sequences column by column from the data matrix, each seventh sequence including N pieces of data; perform the second inverse Fourier transform on each of the plurality of seventh sequences to obtain a plurality of time-domain data subsequences; and form the time-domain data sequence based on the plurality of time-domain data subsequences.

In some embodiments, the time-domain data sequence is formed by concatenating the plurality of time-domain data subsequences.

In some embodiments, a concatenation interval between two of the time-domain data subsequences is half of a length of the time-domain data subsequence.

In some embodiments, the processing module 21 is further configured to perform a filtering operation and/or a window adding operation on the time-domain data sequence, where the filtering operation is single-phase filtering or multi-phase filtering.

In some embodiments, the filtering operation satisfies at least one of: a coefficient of a filter corresponding to the filtering operation is a preset value; a width of a filter corresponding to the filtering operation is greater than a bandwidth of a subband corresponding to the filtering operation.

In some embodiments, the to-be-transmitted data includes modulation data and/or reference signal data.

In some embodiments, in response that the to-be-transmitted data includes the reference signal data, the N first sequences carry the reference signal data.

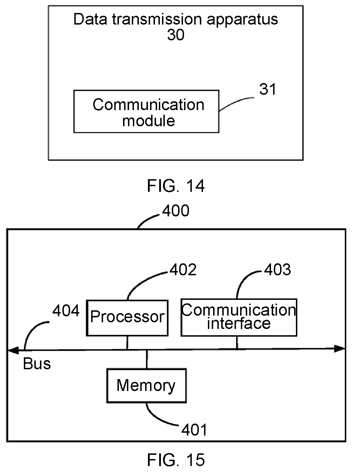

FIG. 14 shows another data transmission apparatus provided in the embodiments of the present disclosure. The data transmission apparatus 30 includes: a communication module 31.

The communication module 31 is configured to transmit data on a channel bandwidth; where the channel bandwidth includes W subbands; among the W subbands, M subbands are single-carrier subbands, K subbands are multi-carrier subbands, M is less than or equal to N, N is less than or equal to W, K is equal to N-M, and N, W, M are all positive integers; and
within a time-domain symbol length, a quantity of data in a first sequence corresponding to a multi-carrier subband adjacent to the single-carrier subband is less than a number of subcarriers of the multi-carrier subband; a quantity of data in a first sequence corresponding to a multi-carrier subband non-adjacent to the single-carrier subband is equal to the number of subcarriers of the multi-carrier subband; a quantity of data in a first sequence corresponding to the single-carrier subband is greater than a number of subcarriers of a multi-carrier subband.

In a case of impelmenting the functions of the integrated modules mentioned above in the form of hardware, the embodiments of the present disclosure further provide a structure of a communication apparatus, and the communication apparatus is configured to perform the data transmission method provided by the embodiments of the present disclosure. As shown in FIG. 15, the communication apparatus 400 includes a communication interface 403, a processor 402, and a bus 404. In some embodiments, the communication apparatus may further include a memory 401.

The processor 402 may implement or perform various exemplary logical blocks, modules and circuits described in conjunction with the embodiments of the present disclosure. The processor 402 may be a central processing unit, a general-purpose processor, a digital signal processor, an application specific integrated circuit, a field programmable gate array or other programmable logic devices, a transistor logic device, a hardware component or any combination thereof. The processor 402 may implement or perform various exemplary logical blocks, modules and circuits described in conjunction with the embodiments of the present disclosure. The processor 402 may also be a combination that implements computing functions, for example, including a combination of one or more microprocessors, a combination of a digital signal processor (DSP) and a microprocessor, or the like.

The communication interface 403 is configured to connect with other devices via a communication network. The communication network may be an Ethernet, a radio access network, a wireless local area network (WLAN), or the like.

The memory 401 may be, but be not limited to, a read-only memory (ROM) or other types of static storage devices capable of storing static information and instructions, a random access memory (RAM) or other types of dynamic storage devices capable of storing information and instructions, or may also be an electrically erasable programmable read-only memory (EEPROM), a magnetic disk storage medium or other magnetic storage devices, or any other medium capable of being used to carry or store the desired program codes in the form of instructions or data structures and capable of being accessed by a computer.

As an implementation, the memory 401 may exist independently of the processor 402, and the memory 401 may be connected to the processor 402 via the bus 404 and used for storing instructions or program codes. The processor 402, when calling and executing the instructions or program codes stored in the memory 401, is capable of implementing the data transmission method provided in the embodiments of the present disclosure.

In another implementation, the memory 401 may also be integrated with the processor 402.

The bus 404 may be an extended industry standard architecture (EISA) bus or the like. Buses 404 may be divided into address buses, data buses, control buses, and the like. For the convenience of representation, only one thick line is used in FIG. 15 for representation, but it does not mean that there is only one bus or one type of bus.

Some embodiments of the present disclosure provide a computer-readable storage medium (e.g., a non-transitory computer-readable storage medium), and the computer-readable storage medium has stored computer program instructions therein that, when running on a computer, cause the computer to perform the data transmission method as described in any of the above-mentioned embodiments.

In an implementation, the computer may be the above-mentioned data transmission apparatus, and the present disclosure does not limit the form of the computer.

In some examples, the above-mentioned computer-readable storage medium may include, but be not limited to, a magnetic storage device (e.g., a hard disk, a floppy disk or a magnetic tape, etc.), an optical disk (e.g., a Compact Disk (CD) or a Digital Versatile Disk (DVD), etc.), a smart card and a flash memory device (e.g., an Erasable Programmable Read-Only Memory (EPROM), a card, a stick or a key driver, etc.). The various computer-readable storage media described in the present disclosure may represent one or more devices and/or other machine-readable storage media for storing information. The term "machine-readable storage medium" may include, but be not limited to, a radio channel and various other media capable of storing, containing, and/or carrying instructions and/or data.

The embodiments of the present disclosure provide a computer program product including instructions, and the computer program product, when running on a computer, causes the computer to perform the data transmission method as described in any embodiment of the above-mentioned embodiments.

The foregoing is only the specific implementations of the present disclosure, but the protection scope of the present disclosure is not limited thereto, and any changes or substitutions within the scope of the technologies disclosed in the present disclosure should be covered within the protection scope of the present disclosure. Therefore, the protection scope of the present disclosure should be based on the protection scope of the claims.

## Claims

1. A data transmission method, comprising:
dividing to-be-transmitted data into N first sequences; wherein among the N first sequences, each of M first sequences corresponds to a single-carrier subband, each of K first sequences corresponds to a multi-carrier subband, N is a positive integer, M is a positive integer less than N, and K is equal to N-M; and within a time-domain symbol length, a quantity of data of a first sequence corresponding to the multi-carrier subband is less than a quantity of data of a first sequence corresponding to the single-carrier subband;
obtaining N second sequences based on the N first sequences; wherein the N second sequences comprise a sequence obtained by performing a Fourier transform on the first sequence corresponding to the single-carrier subband, a sequence obtained by performing a zero-padding operation on a first sequence corresponding to a multi-carrier subband adjacent to the single-carrier subband, and a first sequence corresponding to a multi-carrier subband non-adjacent to the single-carrier subband;
performing a first inverse Fourier transform on the N second sequences to obtain N third sequences;
performing a second inverse Fourier transform on the N third sequences to obtain a time-domain data sequence; and
transmitting the time-domain data sequence on a transmission resource of the to-be-transmitted data.

2. The method according to claim 1, wherein N subbands comprised in the transmission resource of the to-be-transmitted data are all or a part of subbands comprised in a channel bandwidth, and the N subbands are subbands corresponding to the N first sequences.

3. The method according to claim 2, wherein the N subbands satisfy, in a frequency domain, at least one of:
the N subbands are arbitrarily distributed in the frequency domain;
the N subbands are continuous in the frequency domain;
bandwidths of the N subbands are same;
M single-carrier subbands among the N subbands are non-continuous in the frequency domain.

4. The method according to claim 1, wherein both sides of the multi-carrier subband are adjacent to two single-carrier subbands respectively, and the multi-carrier subband is used for transmitting data or the multi-carrier subband is not used for transmitting data.

5. The method according to claim 1, wherein within a time-domain symbol length, the quantity of data of the first sequence corresponding to the multi-carrier subband adjacent to the single-carrier subband is less than the quantity of data of the first sequence corresponding to the multi-carrier subband non-adjacent to the single-carrier subband.

6. The method according to claim 1, wherein within a time-domain symbol length, the quantity of data of the first sequence corresponding to the multi-carrier subband adjacent to the single-carrier subband is less than a number of subcarriers of the multi-carrier subband adjacent to the single-carrier subband, the quantity of data of the first sequence corresponding to the multi-carrier subband non-adjacent to the single-carrier subband is equal to a number of subcarriers of the multi-carrier subband non-adjacent to the single-carrier subband, and the quantity of data of the first sequence corresponding to the single-carrier subband is greater than the number of subcarriers of the multi-carrier subband.

7. The method according to claim 1, wherein within a same time duration, quantities of data of the M first sequences are same.

8. The method according to claim 1, wherein within a time-domain symbol length, the quantity of data of the first sequence corresponding to the single-carrier subband is an i-th power of 2, i being an integer greater than or equal to 0; and the quantity of data of the first sequence corresponding to the multi-carrier subband non-adjacent to the single-carrier subband is a j-th power of 2, j being an integer greater than or equal to 0.

9. The method according to claim 1, wherein the subband is a single-carrier subband, and a center frequency point of the subband is located at a center of the single-carrier subband.

10. The method according to claim 1, wherein performing the zero-padding operation on the first sequence corresponding to the multi-carrier subband adjacent to the single-carrier subband, comprises:
in response that only one side of the multi-carrier subband adjacent to the single-carrier subband is adjacent to the single-carrier subband, performing the zero-padding operation on the side adjacent to the single-carrier subband in the first sequence corresponding to the multi-carrier subband adjacent to the single-carrier subband; or,
in response that both sides of the multi-carrier subband adjacent to the single-carrier subband are adjacent to the single-carrier subband respectively, performing the zero-padding operation on both sides of the first sequence corresponding to the multi-carrier subband adjacent to the single-carrier subband.

11. The method according to claim 10, wherein a number of padded zeros of the zero-padding operation satisfies a positive correlation with a roll-off factor of a filter of a single-carrier subband that is adjacent to the multi-carrier subband adjacent to the single-carrier subband.

12. The method according to claim 1, wherein data in the first sequence corresponding to the multi-carrier subband adjacent to the single-carrier subband is mapped onto subcarriers non-adjacent to the single-carrier subband, within the multi-carrier subband adjacent to the single-carrier subband, and data mapped onto subcarriers adjacent to the single-carrier subband, within the multi-carrier subband adjacent to the single-carrier subband, is 0.

13. The method according to claim 1, wherein the first inverse Fourier transform is to perform a transform on data within a time-domain symbol in a sequence.

14. The method according to claim 1, wherein the first inverse Fourier transform is an oversampled inverse Fourier transform.

15. The method according to claim 1, wherein a number of transform points of the first inverse Fourier transform satisfies an i-th power of 2, i being an integer greater than or equal to 0.

16. The method according to claim 1, wherein in response that subcarrier spacings of two subbands are same, a same number of transform points is used for the first inverse Fourier transform performed on second sequences corresponding to the two subbands.

17. The method according to claim 1, wherein a zero-frequency position of the first inverse Fourier transform performed on the second sequence is located within a subband corresponding to the second sequence, or a zero-frequency position of the first inverse Fourier transform performed on the second sequence is located on a subcarrier within a subband corresponding to the second sequence.

18. The method according to claim 1, wherein performing the first inverse Fourier transform on the N second sequences to obtain the N third sequences, comprises:
performing a cyclic repetition on partial data of a second sequence corresponding to the single-carrier subband, to obtain a fourth sequence; and
performing the first inverse Fourier transform on the fourth sequence to obtain a third sequence corresponding to the single-carrier subband.

19. The method according to claim 1, wherein performing the first inverse Fourier transform on the N second sequences to obtain the N third sequences, comprises:
performing a cyclic repetition on partial data of a second sequence corresponding to the single-carrier subband, to obtain a fifth sequence; and
performing an oversampled first inverse Fourier transform on the fifth sequence to obtain a third sequence corresponding to the single-carrier subband.

20. The method according to claim 1, wherein performing the second inverse Fourier transform on the N third sequences to obtain the time-domain data sequence, comprises:
acquiring P sixth sequences, P being a positive integer; and
performing the second inverse Fourier transform on the N third sequences and the P sixth sequences together to obtain the time-domain data sequence.

21. The method according to claim 1, wherein performing the second inverse Fourier transform on the N third sequences together to obtain the time-domain data sequence, comprises:
arranging the N third sequences row by row to obtain a data matrix;
extracting a plurality of seventh sequences column by column from the data matrix, each seventh sequence of the plurality of seventh sequences comprising N pieces of data;
performing the second inverse Fourier transform on each of the plurality of seventh sequences to obtain a plurality of time-domain data subsequences; and
forming the time-domain data sequence based on the plurality of time-domain data subsequences.

22. The method according to claim 21, wherein the time-domain data sequence is formed by concatenating the plurality of time-domain data subsequences.

23. The method according to claim 21, wherein a concatenation interval between two of the time-domain data subsequences is half of a length of the time-domain data subsequence.

24. The method according to claim 1, wherein before transmitting the time-domain data sequence on the transmission resource of the to-be-transmitted data, the method further comprises:
performing a filtering operation and/or a window adding operation on the time-domain data sequence, wherein the filtering operation is single-phase filtering or multi-phase filtering.

25. The method according to claim 24, wherein the filtering operation satisfies at least one of:
a coefficient of a filter corresponding to the filtering operation is a preset value;
a width of a filter corresponding to the filtering operation is greater than a bandwidth of a subband corresponding to the filtering operation.

26. The method according to claim 1, wherein the to-be-transmitted data comprises modulation data and/or reference signal data.

27. The method according to claim 26, wherein in response that the to-be-transmitted data comprises the reference signal data, the N first sequences carry the reference signal data.

28. A data transmission method, comprising:
transmitting data on a channel bandwidth; wherein the channel bandwidth comprises W subbands; among the W subbands, M subbands are single-carrier subbands, K subbands are multi-carrier subbands, M is less than or equal to N, N is less than or equal to W, K is equal to N-M, and N, W, M are all positive integers; and
within a time-domain symbol length, a quantity of data in a first sequence corresponding to a multi-carrier subband adjacent to the single-carrier subband is less than a number of subcarriers of the multi-carrier subband; a quantity of data in a first sequence corresponding to a multi-carrier subband non-adjacent to the single-carrier subband is equal to the number of subcarriers of the multi-carrier subband; a quantity of data in a first sequence corresponding to the single-carrier subband is greater than a number of subcarriers of a multi-carrier subband.

29. A communication apparatus, comprising: a memory and a processor; wherein the memory and the processor are coupled; the memory is configured to store instructions executable by the processor; the processor, upon executing the instructions, performs the method according to any one of claims 1 to 28.

30. A computer-readable storage medium, wherein computer instructions are stored on the computer-readable storage medium, and when the computer instructions are run on a communication apparatus, the communication apparatus performs the method according to any one of claims 1 to 28.
